(19) Europäisches Patentamt
European Patent Office
Office européen des brevets

(11) Veröffentlichungsnummer: **0 162 366**
**B1**

(12) # EUROPÄISCHE PATENTSCHRIFT

(45) Veröffentlichungstag der Patentschrift: **22.06.88**

(51) Int. Cl.⁴: **C 07 C 145/04,** A 01 N 47/24

(21) Anmeldenummer: **85105539.2**

(22) Anmeldetag: **07.05.85**

(54) **Sulfenylierte Carbamidsäureester, ein Verfahren zu ihrer Herstellung und ihre Verwendung.**

(30) Priorität: **17.05.84 DE 3418375**

(43) Veröffentlichungstag der Anmeldung: **27.11.85 Patentblatt 85/48**

(45) Bekanntmachung des Hinweises auf die Patenterteilung: **22.06.88 Patentblatt 88/25**

(84) Benannte Vertragsstaaten: **BE CH DE FR GB IT LI NL SE**

(56) Entgegenhaltungen:
**DE - A - 1 940 625**
**FR - A - 1 493 581**

(73) Patentinhaber: **BAYER AG, Konzernverwaltung RP Patentabteilung, D-5090 Leverkusen 1 Bayerwerk (DE)**

(72) Erfinder: **Kühle, Engelbert, Dr., von-Bodelschwingh-Strasse 42, D-5060 Bergisch Gladbach 2 (DE)**
Erfinder: **Paulus, Wilfried, Dr., Deswatinesstrasse 90, D-4150 Krefeld (DE)**
Erfinder: **Genth, Hermann, Dr., Am Heckerhof 60, D-4150 Krefeld (DE)**
Erfinder: **Reinecke, Paul, Dr., Steinstrasse 8, D-5090 Leverkusen 3 (DE)**
Erfinder: **Hänssler, Gerd, Dr., Heymannstrasse 40, D-5090 Leverkusen 3 (DE)**
Erfinder: **Brandes, Wilhelm, Dr., Eichendorffstrasse 3, D-5653 Leichlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft neue N-sulfenylierte Carbamidsäureester, ein Verfahren zu ihrer Herstellung, mikrobizide Mittel, die diese Verbindungen enthalten und ihre Verwendung als Mikrobizide, im besonderen zum Schutz technischer Materialien und im Pflanzenschutz.

Die Verwendung von N-(Trihalogenmethylthio)-Verbindungen zum Schutz technischer Materialien gegen mikrobiellen Abbau ist bekannt (US 2563770, Journ. Agr. Food Chem. 14, 365 (1966), Fette, Seifen, Anstrichmittel 68, 272 (1966). Sie befriedigen jedoch nicht immer, da nicht alle Mikroorganismen von ihnen erfasst werden; ausserdem sind sie in Anstrich- und Imprägniermitteln schlecht löslich. Auch die mikrobizide Wirkung der in der DE-A-1940625 und der FR-A-1493581 beschriebenen N-(Trihalogenmethylthio)-carbamidsäureester ist für eine wirksame Bekämpfung von Mikroorganismen in technischen Materialien noch unzureichend.

Es ist ausserdem bekannt, dass N-(Trihalogenmethylthio)-Verbindungen als Fungizide in Landwirtschaft und Gartenbau verwendet werden können. So werden z.B. N-(Trichlormethylthio)-tetrahydrophthalimide (DE 887506) und N,N-Dimethyl-N'-phenyl-N'(fluordichlormethylthio)-sulfamid (Angew. Chem. 76, 807 (1964) im Obst- und Weinbau zur Bekämpfung von Pilzkrankheiten praktisch eingesetzt. Das N,N-Dimethyl-N'-phenyl-N'-(fluordichlormethylthio)-sulfamid zeigt darüber hinaus Wirkung im Holzschutz bei der Bekämpfung holzverfärbender Pilze (R. Wegler, Chemie der Pflanzenschutz- und Schädlingsbekämpfungsmittel, Bd. 4, Seite 269 (1977).

Die Wirkung dieser bekannten Verbindungen ist jedoch, insbesondere bei niedrigen Aufwandmengen, nicht immer befriedigend.

Es wurde nun gefunden, dass folgende speziellen neuen N-sulfenylierten Carbamidsäureester der Formel

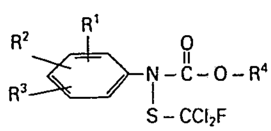

(I),

in der

$R^1$ bis $R^3$ gleich oder verschieden sind und Wasserstoff, Halogen, Nitro, Cyano, Alkyl, Alkoxy, Alkylmercapto, Trihalogenmethyl, Trihalogenmethoxy oder Trihalogenmethylmercapto bedeuten und

$R^4$ für einen Methyl- oder einen gegebenenfalls durch Chlor substituierten Benzylrest steht, eine gegenüber den vorbekannten N-(Trihalogenmethyl)-Verbindungen wesentlich verbesserte mikrobizide Wirkung aufweisen und sich besonders zum Schutz technischer Materialien und zur Verwendung in Pflanzenschutzmitteln eignen.

Halogen bedeutet im allgemeinen erfindungsgemäss Fluor, Chlor, Brom und Jod, bevorzugt Fluor und/oder Chlor.

Alkyl bedeutet im allgemeinen erfindungsgemäss einen geradkettig oder verzweigten Kohlenwasserstoffrest mit 1 bis 12, bevorzugt 1 bis 8, Kohlenstoffatomen. Insbesondere bevorzugt ist der Niederalkylrest mit 1 bis etwa 6 Kohlenstoffatomen. Beispielsweise seien die folgenden Alkylreste genannt: Methyl, Ethyl, Propyl, Isopropyl, Butyl, Isobutyl, Pentyl, Isopentyl, Hexyl und Isohexyl.

Alkoxy bedeutet im allgemeinen erfindungsgemäss einen an Sauerstoff gebundenen geradkettigen oder verzweigten Kohlenwasserstoffrest mit 1 bis 12, bevorzugt 1 bis 8, Kohlenstoffatomen. Insbesondere bevorzugt ist der Niederalkoxyrest mit 1 bis etwa 6 Kohlenstoffatomen. Beispielsweise seien die folgenden Alkoxyreste genannt: Methoxy, Ethoxy, Propoxy, Isopropoxy, Butoxy, Isobutoxy, Pentoxy, Isopentoxy, Hexoxy und Isohexoxy.

Alkylmercapto bedeutet im allgemeinen erfindungsgemäss einen an Schwefel gebundenen geradkettigen oder verzweigten Kohlenwasserstoffrest mit 1 bis 18 Kohlenstoffatomen. Insbesondere bevorzugt ist der Niederalkylmercaptorest mit 1 bis etwa 6 Kohlenstoffatomen. Beispielsweise seien die folgenden Alkylmercaptoreste genannt: Methylmercapto, Ethylmercapto, Propylmercapto, Isopropylmercapto, Butylmercapto, Isobutylmercapto, Pentylmercapto, Isopentylmercapto, Hexylmercapto und Isohexylmercapto.

Trihalogenmethyl bedeutet im allgemeinen erfindungsgemäss einen durch drei gleiche oder verschiedenen Halogenatome substituierten Methylrest. Halogen bedeutet hier im allgemeinen Fluor, Chlor, Brom oder Jod, bevorzugt Fluor und/oder Chlor. Insbesondere bevorzugt ist die Trifluormethylgruppe.

Trihalogenmethoxy bedeutet im allgemeinen erfindungsgemäss ein durch drei Halogenatome substituierter Methoxyrest. Halogen bedeutet hier im allgemeinen erfindungsgemäss Fluor, Chlor, Brom oder Jod, bevorzugt Fluor und/oder Chlor. Insbesondere bevorzugt ist die Trifluormethoxygruppe.

Trihalogenmethylmercapto bedeutet im allgemeinen erfindungsgemäss ein durch drei Halogenatome substituierter Methylmercaptorest. Halogen bedeutet hier im allgemeinen Fluor, Chlor, Brom oder Jod, bevorzugt Fluor und/oder Chlor. Insbesondere bevorzugt ist die Trifluormethylmercaptogruppe.

Als Vertreter der neuen erfindungsgemässen N-sulfenylierten Carbamidsäureester seien beispielsweise genannt: die N-(Dichlor-fluormethylsulfenyl)-derivate der N-Phenyl-O-methyl-, -O-benzyl- und -O-4-chlorbenzylcarbamidsäureester.

Es wurde auch ein Verfahren zur Herstellung der neuen N-sulfenylierten Carbamidsäureester gefunden, das dadurch gekennzeichnet ist, dass man N-substituierte Carbamidsäurefluoride der Formel

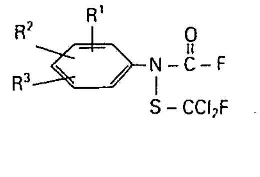

(II)

in der
$R^1$ bis $R^3$ und n die unter Formel (I) angegebene Bedeutung haben, mit einem Alkohol der Formel

$HOR^4$ (III)

in der
$R^4$ die unter Formel (I) angegebene Bedeutung hat, in Gegenwart eines Verdünnungsmittels und eines säurebindenden Mittels umsetzt.

Das erfindungsgemässe Verfahren kann durch das folgende Formelbild erläutert werden.

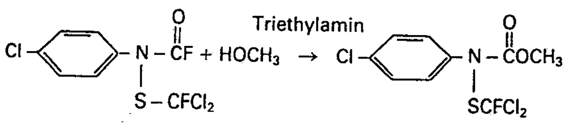


Die N-sulfenylierten Carbamidsäurefluoride für das erfindungsgemässe Verfahren sind an sich bekannt (DE-AS 1297005) und können aus Arylcarbamidsäurefluoriden und Trihalogenmethansulfenylchlorid in Gegenwart eines säurebindenden Mittels hergestellt werden.

Als Beispiele seien die N-(Fluordichlormethansulfenyl)-carbamidsäurefluoride des Anilins, 2-Chlor-anilins, 3,4-Dichloranilins, 3-Nitroanilins, 4-Toluidins, 4-Isopropylanilins, 4-Nitroanilins, 4-Toluidins, 4-Isopropylanilins, 3-Chlor-4-methoxyanilins, 2-Chlor-4-methyl-mercaptoanilins, 2-Chlor-4-trifluormethylanilins, 4-Difluorchlor-methylanilins, 3-Chlor-4-trifluormethoxyanilins und 3-Trifluormethylmercaptoanilins genannt.

Als Alkohole seien Methanol, Benzylalkohol und 3,4-Dichlorbenzylalkohol genannt.

Als Verdünnungsmittel für das erfindungsgemässe Verfahren seien beispielsweise genannt: Kohlenwasserstoffe wie Toluol oder Xylol, Chlorkohlenwasserstoffe, wie Dichlormethan oder Chlorbenzol, Ether, wie Dioxan, Ketone, wie Aceton, Alkohole, wie Ethanol und Methanol, oder Wasser. Als Verdünnungsmittel werden bevorzugt: Kohlenwasserstoffe, Alkohole und/oder Wasser.

Als säurebindende Mittel für das erfindungsgemässe Verfahren seien beispielsweise genannt: tert. Amine wie Triethylamin, Dimethylbenzylamin, Pyridin, anorganische Basen, wie Natriumhydroxid, Natrium- bzw. Kaliumcarbonat oder Natrium- bzw. Kaliumbicarbonat.

Die säurebindenden Mittel werden im allgemeinen in einer Menge von 1 bis 2 Mol, bevorzugt 1,0 bis 1,2 Mol, bezogen auf 1 Mol des N-substituierten Carbamidsäurefluorids, eingesetzt.

Das erfindungsgemässe Verfahren kann im allgemeinen im Temperaturbereich von 0 bis 100 °C, bevorzugt von 20 bis 50 °C, durchgeführt werden.

Das erfindungsgemässe Verfahren wird im allgemeinen bei Normaldruck durchgeführt. Es ist jedoch auch möglich, Unter- oder Überdrucke (beispielsweise im Druckbereich von 0,5 bis 1,5 bar) zu verwenden.

Das erfindungsgemässe Verfahren kann beispielsweise wie folgt durchgeführt werden:
Das N-substituierte Carbamidsäurefluorid wird in einem Verdünnungsmittel gelöst. In diese Lösung gibt man den Alkohol und ein tert. Amin und rührt bei der jeweiligen Reaktionstemperatur. Hierbei fällt das Reaktionsprodukt aus, das in üblicher Weise, beispielsweise durch Kristallisation, isoliert werden kann.

Die erfindungsgemässen N-substituierten Carbamidsäureester können als Wirkstoffe zur Bekämpfung von unerwünschten Mikroorganismen, im besonderen zum Schutz technischer Materialien und im Pflanzenschutz, verwendet werden.

Technische Materialien sind erfindungsgemäss nicht lebende Materialien, die für die Verwendung in der Technik zubereitet worden sind. Beispielsweise können technische Materialien, die durch erfindungsgemässe Wirkstoffe vor einer mikrobiellen Veränderung oder Zerstörung geschützt werden sollen, Klebstoffe, Leime, Papier und Karton, Textilien, Leder, Holz, Anstrichmittel und Kunststoffartikel, Kühlschmiermittel und andere Materialien sein, die durch Mikroorganismen zersetzt werden können. Im Rahmen der zu schützenden Materialien seien auch Teile von Produktionsanlagen, beispielsweise Kühlwasserkreisläufe genannt, die durch Mikroorganismen beeinträchtigt werden können. Im Rahmen der vorliegenden Erfindung seien als technische Materialien vorzugsweise Klebstoffe, Leime, Papier und Kartone, Leder, Holz, Anstrichmittel, Kühlschmiermittel und Kühlkreisläufe genannt.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemässen Wirkstoffe gegen Pilze, insbesondere Schimmelpilze und holzverfärbende und holzzerstörende Pilze (Basidiomyceten), sowie gegen Schleimorganismen und Algen.

Es seien beispielsweise Mikroorganismen der folgenden Gattungen genannt:
Alternaria, wie Alternaria tenuis,
Aspergillus, wie Aspergillus niger,
Chaetomium, wie Chaetomium globosum,
Coniophora, wie Coniophora cerebella,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Staphylococcus, wie Staphylococcus aureus,
Trichoderma, wie Trichoderma viride,
Escherichia, wie Escherichia coli,
Pseudomonas, wie Pseudomonas areuginosa.

Je nach Anwendungsgebiet können die erfindungsgemässen Wirkstoffe in üblicher Weise formuliert werden, z. B. als Lösung, Emulsion, Suspension, Pulver, Paste oder Granulat.

Derartige Formulierungen können in an sich bekannter Weise hergestellt werden, z. B. durch Vermischen der Wirkstoffe mit einem Streckmittel, das aus flüssigem Lösungsmittel und/oder festen Trägerstoffen besteht, gegebenenfalls unter Verwendung von oberflächenaktiven Mitteln, wie Emulgatoren und/oder Dispergiermitteln, wobei

gegebenenfalls im Falle der Benutzung von Wasser als Streckmittel organische Lösungsmittel wie Alkohole als Hilfsmittel verwendet werden können.

Flüssige Lösungsmittel für die Wirkstoffe können beispielsweise Wasser, Alkohole, wie niedere aliphatische Alkohole, vorzugsweise Ethanol oder Isopropanol, oder Benzylalkohol, Ketone wie Aceton oder Methylethylketon, flüssige Kohlenwasserstoffe, wie Benzinfraktionen, halogenierte Kohlenwasserstoffe, wie 1,2-Dichlorethan sein.

Mikrobizide Mittel enthalten die Wirkstoffe im allgemeinen in einer Menge von 1 bis 95%, bevorzugt von 10 bis 75%.

Die Anwendungskonzentration der erfindungsgemässen Wirkstoffe richtet sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im allgemeinen liegen die Anwendungskonzentrationen im Bereich von 0,001 bis 5 Gew.-%, vorzugsweise von 0,05 bis 1,0 Gew.-%, bezogen auf das zu schützende Material.

Die erfindungsgemässen Wirkstoffe können auch in Mischung mit anderen bekannten Wirkstoffen vorliegen. Beispielsweise seien die folgenden Wirkstoffe genannt: Benzylalkoholmono(poly)hemiformal und andere Formaldehyd abspaltende Verbindungen, Benzimidazolyl-methylcarbamate, Tetramethylthiuramdisulfid, Zinksalze von Dialkyldithiocarbamaten, 2,4,5,6-Tetrachlorisophthalonitril, Thiazolylbenzimidazol, Mercaptobenzthiazol, Trialkylzinnverbindungen, Methylenbisthiocyanat und Phenolderivate, wie 2-Phenylphenol, (2,2'-Dihydroxy-5,5'-dichlor)-diphenylmethan und 3-Methyl-4-chlor-phenol.

Die erfindungsgemässen Wirkstoffe sind auch für den Gebrauch als Pflanzenschutzmittel, also zum Schutz lebender Pflanzen, geeignet. Der Wirkstoff kann sowohl in fungiziden als auch bakteriziden, bevorzugt fungiziden, Mitteln verwendet werden.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Bakterizide Mittel werden im Pflanzenschutz zur Bekämpfung von Pseudomondaceae, Rhizobiaceae, Enterobacteriaceae, Corynebacteriaceae und Streptomycetaceae eingesetzt.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Als Pflanzenschutzmittel können die erfindungsgemässen Wirkstoffe mit besonders gutem Erfolg zur Bekämpfung von Getreidekrankheiten, wie z. B. gegen den Erreger der Blattfleckenkrankheit (Pyrenophora teres) gegen den Erreger der Streifenkrankheit (Drechslera graminea), gegen Puccinia, Septoria, Erysiphe graminis und Cochliobolus sativus, ausserdem gegen den Erreger des falschen Rebenmehltaus (Plasmopara viticola) und gegen Pyricularia oryzae im Reis eingesetzt werden. Weiterhin sind die breite fungizide Wirkung im Agarplattentest und die bakterizide Wirkung zu nennen. Bei entsprechender Dosierung sind auch akarizide Wirkungen zu verzeichnen.

Die Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen (ultra low volume).

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckenmitteln oder Trägerstoffen sind solche Flüssigkeiten gemeint, welche bei normaler Temperatur und unter Normaldruck gasförmig sind, z. B. Aerosol-Treibgase, wie Halogenkohlenwasserstoffe sowie Butan, Propan, Stickstoff und Kohlendioxid. Als feste Trägerstoffe kommen in Frage: z. B. natürliche Gesteinsmehle, wie Kaoline, Tonerde, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier- und/oder schaumerzeugende Mittel kommen in Frage: z. B. nichtionogene und anionische Emulgatoren, wie Polyoxyethylen-Fettsäureester, Polyoxyethylen-Fettalkoholether, z. B. Alkylarylpolyglycol-ether, Alkylsulfonate, Alkylsulfate, Arylsulfonate sowie Eiweisshydrolysate. Als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabi-

cum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Bei Behandlung des Bodens sind Wirkstoffkonzentrationen von 0,00001 bis 0,1 Gew.-%, vorzugsweise von 0,0001 bis 0,02%, am Wirkungsort erforderlich.

Herstellungsbeispiele:

Beispiel 1

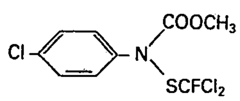

30,6 g (0,1 Mol) N-(4-Chlorphenyl)-N-(dichlorfluormethylsulfenyl)-N-carbamidsäurefluorid werden unter Zusatz von 8 g (0,26 Mol) Methanol in 100 ml Dioxan gelöst. In diese Lösung tropft man 11 g (0,11 Mol) Triethylamin zu. Hierbei lässt man die Temperatur bis 35 °C ansteigen. Man setzt nach Beendigung der Reaktion Wasser zu und nimmt das sich abscheidende Oel in Toluol auf. Nach Trocknung und Verdampfen des Lösungsmittels bleiben 30 g als Oel zurück.

Destillation: $Kp_{0,1}$ 125 °C; Fp. 36–40 °C; $n_D^{20}$ 1,5548. Man erhält dasselbe Produkt, wenn man anstatt Dioxan die Reaktion in 100 ml Methanol durchführt.

Entsprechend Beispiel 1 wurden die Verbindungen der Beispiele 2 bis 18 hergestellt.

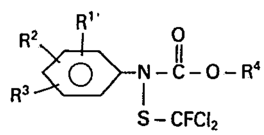

| Beisp. Nr. | $R^1$–$R^3$ | $R^4$ | Sdp. | Fp. | ($n_D^{20}$) |
|---|---|---|---|---|---|
| 2 | H | $CH_3$ | | 44–45° | |
| 3 | H | $C_6H_5$–$CH_2$ | 165–168°/0,1 | | |
| 4 | 3–Cl | $CH_3$ | | | (1,5591) |
| 5 | 2,3–Cl | $CH_3$ | | | (1,5631) |
| 6 | 2,4–Cl | $CH_3$ | 137°/0,18 | | |
| 7 | 3,4–Cl | $CH_3$ | | | (1,5661) |
| 8 | 3,5–Cl | $CH_3$ | 135°/0,1 | | |
| 9 | 3–$CH_3$ | $CH_3$ | 125–130°/0,2 | | |
| 10 | 4–$CH_3$ | $CH_3$ | 127–131°/0,25 | | |
| 11 | 2–$CH_3$, 4–Cl | $CH_3$ | 126°/0,1 | | |
| 12 | 4–$CH_3$, 3–Cl | $CH_3$ | 145–150°/0,2 | | |
| 13 | 3–$CF_3$ | $CH_3$ | 94–96°/0,1 | | |
| 14 | 4–$CF_3$0 | $CH_3$ | 95–100°/0,1 | | |
| 15 | 3–Cl, 4–$CF_3$ | $CH_3$ | 125–128°/0,1 | | |
| 16 | 3,4–$CH_3$0 | $CH_3$ | | | (1,5529) |
| 17 | 4–$C_2H_5$0 | $CH_3$ | 135–140°/0,1 | | |
| 18 | 3,5–Cl, –4$CH_3$0 | $CH_3$ | | | (1,5600) |

Anwendungsbeispiele:

Beispiel 19

Zum Nachweis der Wirksamkeit gegen Pilze, die technische Materialien zerstören, werden die minimalen Hemm-Konzentrationen (MHK) von erfindungsgemässen Wirkstoffen bestimmt:

Ein Agar, der aus Bierwürze und Pepton hergestellt wird, wird mit erfindungsgemässen Wirkstoffen in Konzentrationen von 0,1 mg/l bis 5000 mg/l versetzt. Nach Erstarren des Agars erfolgt Kontamination mit Reinkulturen der in der Tabelle aufgeführten Testorganismen. Nach zweiwöchiger Lagerung bei 28 °C und 60 bis 70% rel. Luftfeuchtigkeit wird die MHK bestimmt. MHK ist die niedrigste Konzentration an Wirkstoff, bei der keinerlei Bewuchs durch die verwendete Mikrobenart erfolgt, sie ist in der nachstehenden Tabelle I angegeben.

Tabelle I: MHK's in mg/l bei der Entwicklung erfindungsgemässer Substanzen auf Pilze

| Testorganismen | Substanz gem. Beispiel | | | | | | | |
|---|---|---|---|---|---|---|---|---|
| | 2 | 1 | 4 | 5 | 6 | 7 | 11 | 12 |
| Alternaria tenuis | 0,5 | | | | | | | |
| Aspergillus niger | 5 | <20 | <20 | <20 | <20 | <35 | <20 | <20 |
| Aureobasidium pullulans | 1,5 | | | | | | | |
| Chaetomium globosum | 2 | <20 | <20 | <20 | <20 | <20 | <20 | <20 |
| Coniophora puteana | 0,1 | | | | | | | |
| Lentinus tigrinus | 0,5 | | | | | | | |
| Penicillium glaucum | 20 | <20 | <20 | <20 | <20 | <20 | <20 | <20 |
| Polyporus versicolor | 1,5 | | | | | | | |
| Sclerophoma pityophila | 1 | | | | | | | |

Beispiel 20

Pyrenophora teres-Test (Gerste)/protektiv

Lösungsmittel: 100 Gewichtsteile Dimethylformamid

Emulgator: 0,25 Gewichtsteile Alkylarylpolyglykolether

Zur Herstellung einer zweckmässigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Abtrocknen des Spritzbelages werden die Pflanzen mit einer Konidiensuspension von Pyrenophora teres besprüht. Die Pflanzen verbleiben 48 Stunden bei 20 °C und 100% relativer Luftfeuchtigkeit in einer Inkubationskabine.

Die Pflanzen werden in einem Gewächshaus bei einer Temperatur von ca. 20 °C und einer relativen Luftfeuchtigkeit von ca. 80% aufgestellt.

7 Tage nach der Inokulation erfolgt die Auswertung.

Tabelle II

Pyrenophora teres-Test (Gerste)/protektiv

| Wirkstoff | Wirkstoffkonzentration in der Spritzbrühe in Gew.-% | Krankheitsbefall in % der unbehandelten Kontrolle |
|---|---|---|
| bekannt: | | |
| 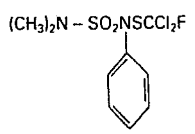 | 0,025 | 72,5 |
| erfindungsgemäss: | | |
| 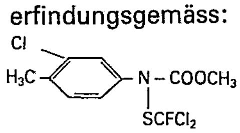 | 0,025 | 39,4 |
| 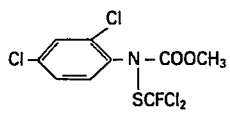 | 0,025 | 37,7 |
| 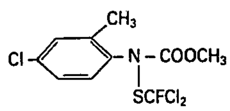 | 0,025 | 31,3 |
| 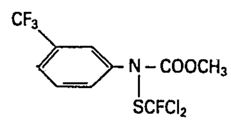 | 0,025 | 30,3 |
| 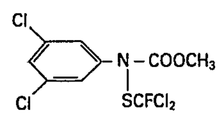 | 0,025 | 30,3 |
| 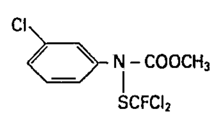 | 0,025 | 20,3 |
| 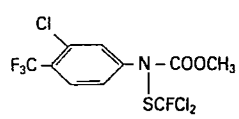 | 0,025 | 20,3 |
| 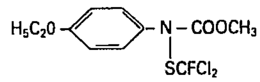 | 0,025 | 29,4 |
| 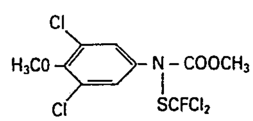 | 0,025 | 25,0 |
| 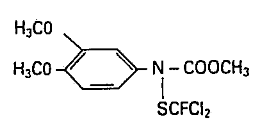 | 0,025 | 0,0 |

| Wirkstoff | Wirkstoff-konzentration in der Spritzbrühe in Gew.-% | Krankheits-befall in % der unbehan-delten Kontrolle |
|---|---|---|
| erfindungsgemäss: | | |
| 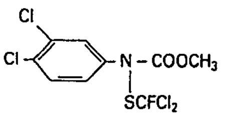 | 0,025 | 14,5 |
| 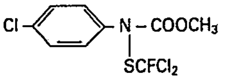 | 0,025 | 37,7 |

Beispiel 21

Drechslera graminea-Test (Gerste)/Saatgutbehandlung (syn. Helminthosporium gramineum)

Die Anwendung der Wirkstoffe erfolgt als Trokkenbeizmittel. Sie werden zubereitet durch Abstrecken des jeweiligen Wirkstoffes mit Gesteinsmehl zu einer feinpulvrigen Mischung, die eine gleichmässige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut setzt man in gesiebter, feuchter Standarderde eingebettet, in verschlossenen Petrischalen im Kühlschrank 10 Tage lang einer Temperatur von 4 °C aus. Dabei wird die Keimung der Gerste und gegebenenfalls auch der Pilzsporen eingeleitet. Anschliessend sät man die vorgekeimte Gerste mit 2 × 50 Korn 3 cm tief in eine Standarderde und kultiviert sie im Gewächshaus bei einer Temperatur von ca. 18 °C in Saatkästen, die täglich 15 Stunden dem Licht ausgesetzt werden.

Ca. 3 Wochen nach der Aussaat erfolgt die Auswertung der Pflanzen auf Symptome der Streifenkrankheit.

Tabelle III

Drechslera graminea-Test (Gerste)/Saatgutbehandlung (syn. Helminthosporium gramineum)

| Wirkstoff | Wirkstoff-aufwand-menge in mg/kg Saatgut | kranke Pflanzen in % der insgesamt aufgelaufenen Pflanzen |
|---|---|---|
| ungebeizt | – | 29,7 |
| bekannt: | | |
| 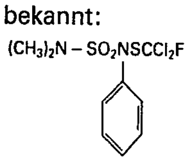 | 600 | 23,9 |

| Wirkstoff | Wirkstoff-aufwand-menge in mg/kg Saatgut | kranke Pflanzen in % der insgesamt aufgelaufenen Pflanzen |
|---|---|---|
| erfindungsgemäss: | | |
| 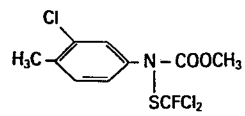 | 500 | 3,2 |
| 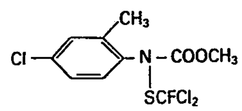 | 500 | 0,0 |
| 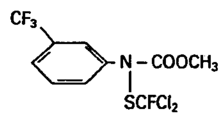 | 500 | 0,0 |
| 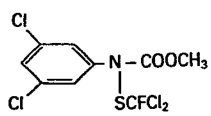 | 500 | 0,0 |
| 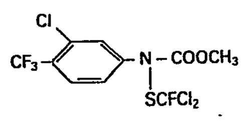 | 500 | 1,0 |

Beispiel 22

Pyricularia-Test (Reis)/protektiv
Lösungsmittel: 12,5 Gewichtsteile Aceton
Emulgator: 0,3 Gewichtsteile Alkylarylpolyglykolether

Zur Herstellung einer zweckmässigen Wirkstoffzubereitung vermischt man 1 Gewichtsteil Wirkstoff mit den angegebenen Mengen Lösungsmittel und verdünnt das Konzentrat mit Wasser und der angegebenen Menge Emulgator auf die gewünschte Konzentration.

Zur Prüfung auf protektive Wirksamkeit bespritzt man junge Reispflanzen mit der Wirkstoffzubereitung bis zur Tropfnässe. Nach dem Abtrocknen des Spritzbelages werden die Pflanzen mit einer wässrigen Sporensuspension von Pyricularia oryzae inokuliert. Anschliessend werden die Pflanzen in einem Gewächshaus bei 100% rel. Luftfeuchtigkeit und 25 °C aufgestellt.

4 Tage nach der Inokulation erfolgt die Auswertung des Krankheitsbefalls.

Tabelle IV

Pyricularia-Test (Reis)/protektiv

| Wirkstoff | Wirkstoff-konzentration in % | Krankheits-befall in % der unbehandelten Kontrolle |
|---|---|---|
| bekannt: | | |
| 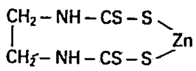 | 0,025 | 75 |
| erfindungsgemäss: | | |
| 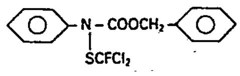 | 0,025 | 0 |
| 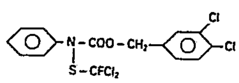 | 0,025 | 10 |

**Patentansprüche**

1. N-Sulfenylierte Carbamidsäureester der Formel

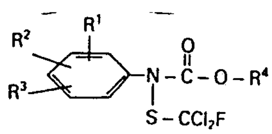

in der
$R^1$ bis $R^3$ gleich oder verschieden sind und Wasserstoff, Halogen, Nitro, Cyano, Alkyl, Alkoxy, Alkylmercapto, Trihalogenmethyl, Trihalogenmethoxy oder Trihalogenmethylmercapto bedeuten und
$R^4$ für einen Methyl- oder einen gegebenenfalls durch Chlor substituierten Benzylrest steht.

2. N-Sulfenylierte Carbamidsäureester nach Anspruch 1 der Formel

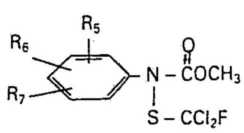

in der
$R^5$ bis $R^7$ gleich oder verschieden sind und Wasserstoff, Halogen, Nitro, Cyano, Niederalkyl, Niederalkoxy, Niederalkylmercapto, Trihalogenmethyl, Trihalogenmethoxy, Trihalogenmethylmercapto bedeuten.

3. Verfahren zur Herstellung der N-sulfenylierten Carbamidsäureester nach Anspruch 1, dadurch gekennzeichnet, dass man N-substituierte Carbamidsäurefluoride der Formel

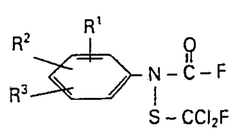

in der
$R^1$ bis $R^3$ gleich oder verschieden sind und Wasserstoff, Halogen, Nitro, Cyano, Alkyl, Alkoxy, Alkylmercapto, Trihalogenmethyl, Trihalogenmethoxy oder Trihalogenmethylmercapto bedeuten, mit einem Alkohol der Formel

$HOR^4$

in der
$R^4$ für Methyl- oder einen gegebenenfalls durch Chlor substituierten Benzylrest steht, in Gegenwart eines Verdünnungsmittels und eines säurebindenden Mittels umsetzt.

4. Verwendung der N-sulfenylierten Carbamidsäureester gemäss Anspruch 1 oder 2 als Mikrobizide zum Schutz technischer Materialien vor Veränderung oder Zerstörung durch Mikroben und als Fungizide und Bakterizide im Pflanzenschutz.

5. Verwendung nach Anspruch 4, dadurch gekennzeichnet, dass man die N-sulfenylierten Carbamidsäureester bei ihrer Verwendung als Mikrobizide in einer Menge von 0,001 bis 5 Gew.-% bezogen auf das zu schützende Material einsetzt.

**Claims**

1. N-Sulphenylated carbamic acid esters of the formula

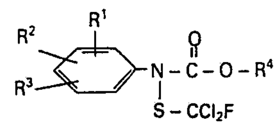

in which
$R^1$ to $R^3$ are identical or different and denote hydrogen, halogen, nitro, cyano, alkyl, alkoxy, alkylmercapto, trihalogenomethyl, trihalogenomethoxy or trihalogenomethylmercapto and
$R^4$ represents a methyl radical or a benzyl radical which is optionally substituted by chlorine.

2. N-Sulphenylated carbamic acid esters according to Claim 1, of the formula

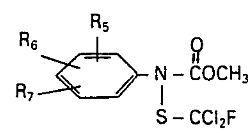

in which
$R^5$ to $R^7$ are identical or different and denote hydrogen, halogen, nitro, cyano, lower alkyl, lower alkoxy, lower alkylmercapto, trihalogenomethyl, trihalogenomethoxy or trihalogenomethylmercapto.

3. Process for the preparation of N-sulphenylated carbamic acid esters according to claim 1, characterized in that N-substituted carbamic acid fluorides of the formula

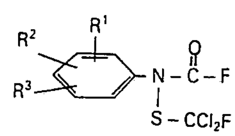

in which
$R^1$ to $R^3$ are identical or different and denote hydrogen, halogen, nitro, cyano, alkyl, alkoxy, alkylmercapto, trihalogenomethyl, trihalogenomethoxy or trihalogenomethylmercapto, are reacted

with an alcohol of the formula

$HOR^4$

in which
$R^4$ represents methyl radical or a benzyl radical which is optionally substituted by chlorine, in the presence of a diluent and an acid-binding agent.

4. Use of N-sulphenylated carbamic acid esters according to Claim 1 or 2 as microbicides for preserving industrial materials from microbial change or distruction and as fungicides and bactericides in plant protection.

5. Use according to Claim 4, characterized in that, when used as microbicides, N-sulphenylated carbamic acid esters are employed in an amount of 0.001 to 5% by weight, based on the material to be preserved.

**Revendications**

1. Esters d'acides carbamiques N-sulfénylés, de formule:

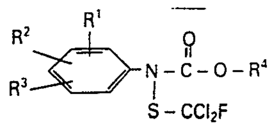

dans laquelle
$R^1$ à $R^3$ sont identiques ou différents et représentent chacun un atome d'hydrogène ou d'halogène, un groupe nitro, cyano, alkyle, alcoxy, alkylmercapto, trihalogénométhyle, trihalogénométhoxy ou trihalogènométhylmercapto, et
$R^4$ représente un reste méthyle ou un reste benzyle portant éventuellement du chlore comme substituant(s).

2. Esters d'acides carbamique N-sulfénylés selon la revendication 1, de formule:

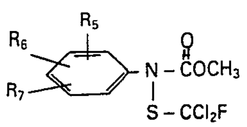

dans laquelle
$R^5$ à $R^7$ sont identiques ou différents et représentent chacun un atome d'hydrogène ou un groupe nitro, cyano, alkyle inférieur, alcoxy inférieur, alkylmercapto inférieur, trihalogénométhyle, trihalogénométhoxy, trihalogénométhylmercapto.

3. Procédé pour préparer les esters d'acides carbamiques N-sulfénylés selon la revendication 1, caractérisé en ce qu'on fait réagir, en présence d'un diluant et d'un agent de fixation des acides, des fluorures d'acides carbamiques N-substitués de formule:

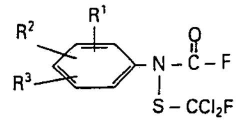

dans laquelle
$R^1$ à $R^3$ sont identiques ou différents et représentent chacun un atome d'hydrogène ou d'halogène, un groupe nitro, cyano, alkyle, alcoxy, alkylmercapto, trihalogénométhyle, trihalogénométhoxy ou trihalogénométhylmercapto, avec un alcool de formule:

$HOR^4$

dans laquelle
$R^4$ représente un groupe méthyle ou un reste benzyle portant éventuellement du chlore comme substituant(s).

4. Utilisation des esters d'acides carbamiques N-sulfénylés selon la revendication 1 ou 2 comme microbicides pour protéger des matières techniques ou industrielles contre une modification ou une décomposition ou destruction par les microbes, et comme fongicides et bactéricides pour la protection des plantes.

5. Utilisation selon la revendication 4, caractérisée en ce qu'on utilise les esters d'acides carbamiques N-sulfénylés, quand on les applique comme microbicides, en une proportion de 0,001 à 5% en poids, par rapport à la matière à protéger.